(19) Europäisches Patentamt
European Patent Office
Office européen des brevets

(11) **EP 1 930 280 A1**

(12) **EUROPÄISCHE PATENTANMELDUNG**

(43) Veröffentlichungstag:
**11.06.2008 Patentblatt 2008/24**

(51) Int Cl.:
***B66B 5/16*** *(2006.01)*     ***B66B 7/02*** *(2006.01)*

(21) Anmeldenummer: 06125624.4

(22) Anmeldetag: **07.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **INVENTIO AG**
**6052 Hergiswil (CH)**

(72) Erfinder:
• **Kocher, Hans**
**6044, Udligenswil (CH)**
• **Muff, Josef A.**
**6024, Hildisrieden (CH)**

(74) Vertreter: **Gaussmann, Andreas**
**Inventio AG**
**Seestrasse 55 Postfach**
**6052 Hergiswil / NW (CH)**

(54) **Bremseinrichtung und Führungsschiene einer Aufzugsanlage mit keilförmiger Bremsfläche**

(57) Die Erfindung betrifft eine Aufzugsanlage (1), eine Führungsschiene (7) einer Aufzugsanlage, eine Bremseinrichtung (10) einer Aufzugsanlage und ein Verfahren zum Führen, Halten und Bremsen einer Aufzugsanlage (1). Die Bremseinrichtung (10) beinhaltet einen Bremsbelag (12), welcher zum Zwecke des Bremsens und Haltens mit einer Bremsfläche (11), vorteilhafterweise mit der Bremsfläche (11) einer Führungsschiene (7), zusammenwirkt. Die Erfindung ist dadurch gekennzeichnet, dass die Bremsfläche (11) mindestens eine in Bremsrichtung ausgerichtete Längs-Keilrille oder Keilerhebung aufweist, auf welche der Bremsbelag (12) bedarfsweise einwirkt. Durch die Längs-Keilrille oder Keilerhebung wird eine Verstärkung der Bremskraft erreicht.

Fig. 3

EP 1 930 280 A1

**Beschreibung**

Die Erfindung betrifft eine Aufzugsanlage, eine Führungsschiene einer Aufzugsanlage, eine Bremseinrichtung einer Aufzugsanlage und ein Verfahren zum Führen, Halten und Bremsen einer Aufzugsanlage gemäss dem Oberbegriff der unabhängigen Patentansprüche.

Eine Aufzugsanlage dient im Wesentlichen dem vertikalen Transport von Gütern oder Personen. Die Aufzugsanlage beinhaltet zu diesem Zweck eine Aufzugskabine, zur Aufnahme der Güter oder Personen, welche Aufzugskabine entlang einer Führungsbahn verfahrbar ist. In der Regel ist die Aufzugsanlage in einem Gebäude eingebaut und die Aufzugskabine transportiert Güter oder Personen von und zu verschiedenen Stockwerken dieses Gebäudes. In einer gebräuchlichen Ausführung ist die Aufzugsanlage in einem Schacht des Gebäudes eingebaut und sie enthält neben der Kabine Tragmittel, welche die Kabine mit einem Gegengewicht verbinden. Mittels eines Antriebes, der wahlweise auf die Tragmittel, direkt auf die Aufzugskabine oder auf das Gegengewicht einwirkt, wird die Aufzugskabine bewegt. Die Führungsbahn zum Führen der Aufzugskabine ist vielfach eine Führungsschiene, welche fest im Gebäude, bzw. im Schacht angeordnet ist. Des Öfteren ist eine derartige Aufzugsanlage auch ausserhalb eines Gebäudes angeordnet, wobei dann die Führungsbahn Teil eines Gerüstes sein kann. Derartige Aufzugsanlagen sind mit Bremssystemen ausgerüstet, welche einerseits die Aufzugskabine in einer Halteposition halten und /oder die Aufzugskabine in einem Fehlerfalle abbremsen und halten können.

Aus EP1213249 ist eine Aufzugsanlage mit einer Bremseinrichtung bekannt, bei welcher ein Halten und Bremsen erzielt wird, indem ein Bremsteil in einen formschlüssigen Kontakt zu einem feststehenden Teil gebracht wird. Der Bremsteil wird dazu mit geringer Kraft an den feststehenden Teil angedrückt. Hierbei wird dem Bremsteil eine definierte Gleitbewegung zugestanden, welche ein Abbremsen ermöglicht. Die Bremseinrichtung benötigt im Besonderen geringe Bremsbetätigungskräfte und somit auch geringe Bremslüftkräfte.

Die Problematik dieser Lösung ist nun darin zu sehen, dass die Bremseinrichtung eine Gleiteinrichtung beinhalten muss um im Falle eines Abbremsens ein sanftes Anhalten der Aufzugskabine zu ermöglichen. Dies benötigt, vor allem bei grösseren Geschwindigkeiten lange Gleitbahnen und zugehörige bremskraftdefinierende Elemente, wie beispielsweise Federn. Dies benötigt viel Bauraum und ist Aufwändig.

Der Erfindung liegt die Aufgabe zugrunde, eine Bremseinrichtung einer Aufzugsanlage bereitzustellen, welche mit geringen Betätigungskräften eine Aufzugskabine in einer Aufzugsanlage im Stillstand halten kann, jedoch im Notfall auch in der Lage ist die Aufzugskabine abzubremsen. Sie soll zudem wenig Bauraum beanspruchen.

Die in den kennzeichnenden Merkmalen der unabhängigen Patentansprüche definierte Erfindung löst diese Aufgabe.

Die Aufzugsanlage beinhaltet eine Aufzugskabine und eine Bremseinrichtung zum Bremsen und Halten der Aufzugskabine. Die Bremseinrichtung beinhaltet einen Bremsbelag, welcher zum Zwecke des Haltens und Bremsens mit einer Bremsfläche zusammenwirkt.

Im Weiteren bezieht sich die Erfindung auf eine Führungsschiene einer Aufzugsanlage. Die Führungsschiene bremst und hält mittels Bremseinrichtung die Aufzugskabine. Dabei weist die Führungsschiene einen Bremsbereich als Bremsfläche zur Interaktion mit der Bremseinrichtung auf.

Ebenso betrifft die Erfindung ein Verfahren zum Führen, Halten und Bremsen der entsprechenden Aufzugsanlage.

Erfindungsgemäss weist die Bremsfläche mindestens eine in Bremsrichtung ausgerichtete Längs-Keilrille oder Keilerhebung auf, auf welche der Bremsbelag bedarfsweise einwirkt. Diese Längskeilrille oder Längskeilerhebung kann eine entsprechend breite Rille- oder Erhebung sein, oder es können mehrere Keilrillen nebeneinander liegen. Der Vorteil dieser Ausführung ist darin zu sehen, dass die Keilrillenform eine Verstärkung einer Normalkraft bewirkt und dass damit bei geringer Normalkraft eine hohe Bremskraft erreicht werden kann, wobei eine Gleitmöglichkeit weiterhin gegeben ist.

Die Normalkraft $F_N$ ist diejenige Kraft die den Bremsbelag im Bedarfsfalle zur planen Bremsfläche andrückt. Die plane Bremsfläche ist senkrecht (90°) zur Normalkraft $F_N$ ausgerichtet. Diese Normalkraft $F_N$ bewirkt eine Bremskraft $F_B$, welche durch den Reibwert $\mu$ zwischen Bremsbelag und Bremsfläche definiert wird.

$$F_B = F_N \times \mu$$

Befindet sich Bremseinrichtung in Bezug auf die Bremsfläche im Stillstand ist als Reibwert $\mu$ ein Haftreibwert $\mu_H$ zu verwenden und bei einer Relativbewegung zwischen Bremseinrichtung und Bremsfläche ist ein Gleitreibwert $\mu_G$ verwendet. Unter Verwendung einer Keilrille resultiert eine Bremskraftverstärkung entsprechend einer Keilebenengestaltung. Bei einer Keilebenen-Neigung entsprechend einem Winkel $\alpha$, wobei der Winkel $\alpha$ die Ebenenabweichung der Keilebene zur planen Bremsfläche bezeichnet, ergibt sich eine Bremskraftverstärkung von $1/\cos\alpha$. Die resultierende Bremskraft $F_{BK}$ von:

$$F_{BK} = (1/\cos\alpha) \times F_N \times \mu$$

Mittels der Längs-Keilrille oder Keilerhebung kann somit eine deutliche Bremskraftverstärkung erzielt werden. Es ist klar, dass sie Keilform in der Regel symmetrisch gewählt werden, damit heben sich Seitenkräfte gegenseitig auf.

Vorteilhafterweise weist der Bremsbelag einer zur Längs-Keilrille oder Keilerhebung der Bremsfläche passende Gegenform auf. Ein Verschleiss des Bremsbelages kann dadurch gering gehalten werden, da Keilflächen aufeinander aufliegen, bzw. reiben. Selbstverständlich ist dafür gesorgt, dass bei einem Verschleiss der Bremsbelag entsprechend nachgedrückt werden kann. Hierbei ist zu beachten, dass heutige Bremseinrichtungen vermehrt zum alleinigen Halten einer Aufzugskabine in einer Etage verwendet werden. Diese Haltekraft $F_H$ ergibt sich beispielsweise aus einer maximalen Lastdifferenz zwischen Kabine und Gegengewicht. In Umkehrung der obgenannten Formel zur Errechnung der Bremskraft ergibt sich dementsprechend eine erforderliche Normalkraft $F_{NH}$ zum Halten einer Kabine in einer Etage von:

$$F_{NH} = F_H \times \cos\alpha / \mu_H$$

Analog ergibt sich eine erforderliche Normalkraft $F_{NB}$ zum Abbremsen einer Kabine:

$$F_{NB} = F_B \times \cos\alpha / \mu_G$$

Hierbei wird anstelle der Haltekraft $F_H$, die erforderliche Bremskraft $F_B$ und anstelle des Haftreibwertes $\mu H$, der Gleitreibwert $\mu_G$ verwendet.

Eine Andrückeinrichtung zum Halten und Bremsen der Kabine kann entsprechend dem Keilwinkel $\alpha$ mit kleineren Drückkräften $F_N$ ausgelegt werden. Dies ermöglicht die Verwendung kleinerer Antriebs- oder Bremslüfteinheiten, was entsprechend günstiger ist.

Selbstverständlich sind bei der Auslegung der Bremseinrichtung die Anzahl der Bremsbeläge und / oder Bremseinrichtungen die zusammenwirken zu berücksichtigen.

In einer bevorzugten Ausführung ist die Bremseinrichtung im Bereiche der Aufzugskabine angeordnet und die Bremsfläche ist in eine Führungsschiene integriert, welche Führungsschiene zugleich die Aufzugskabine führt. Vorteilhafterweise wird pro Führungsschiene mindestens eine Bremseinrichtung verwendet. Dies ist Vorteilhaft, da dadurch unmittelbar die Kabine in einem Halt gehalten werden kann. Tragmitteldehnungen beeinflussen dadurch einen Beladungs- oder Entladungsvorgang nicht.

Ein weiterer Vorteil dieser erfindungsgemässen Lösung ist darin zu sehen, dass der Bremsbelag und damit die Bremseinrichtung zugleich durch die Längsrillen seitlich geführt ist. Ein Entgleisen des Bremsbelages und damit ein Versagen der Bremswirkung ist wirksam verhindert.

Besonders Vorteilhaft ist eine Ausführung, bei welcher die Führungsschiene einen Führungsbereich zur Interaktion mit dem Führungsmittel und einen Bremsbereich als Bremsfläche zur Interaktion mit der Bremseinrichtung aufweist, wobei der Führungsbereich und Bremsbereich unterschiedliche Oberflächen aufweisen und der Führungsbereich geometrisch vom Bremsbereich getrennt ist. Diese Ausführung erlaubt ein optimales und funktionsgerechtes Gestalten der jeweiligen Bereiche.

Vorteilhafterweise ist die Führungsschiene eine T-förmige Führungsschiene, welche einen Schienensteg aufweist und dieser Schienensteg weist sowohl den Führungsbereich zur Interaktion mit dem Führungsmittel und den Bremsbereich zur Interaktion mit der Bremseinrichtung auf. Selbstverständlich sind auch andere Formen von Führungsschienen möglich wie beispielsweise Führungsschienen in Form eines Winkelprofils oder beliebig anderer Formen. T-förmige Führungsschienen sind im Aufzugsbau breit bekannt und deren Herstellung ist einfach möglich.

Der Führungsbereich ist in einer besonders qualitativ hochstehenden Ausführung mit einem Gleitmittel zur Verringerung der Reibung versehen, oder er ist mit einer Gleitbeschichtung bestückt, wobei die Gleitbeschichtung ein Profil, vorzugsweise ein Teflon enthaltendes Kunststoffprofil ist, welches beispielsweise auf den betreffenden Steg der Führungsschiene aufgesteckt wird.

Beispielsweise sind auch Nanokomposite, bspw. homogen aufgebaute Nickel-Fluorpolymerschichten, als Gleitmittelschicht hervorragend geeignet, da sie gleich bleibende Gleiteigenschaften in Verbindung mit guten chemischen und mechanischen Eigenschaften ermöglichen. Diese Ausführung ermöglicht die Bereitstellung einer Führungsschiene, welche hohen Komfortansprüchen gerecht wird.

Der Bremsbereich kann direkt in die Grundstruktur der Bremsbahn eingearbeitet sein. Die Bremsbahn, bzw.

die entsprechende Führungsschiene ist beispielsweise gezogen, gewalzt oder mechanisch bearbeitet. Alternativ kann der Bremsbereich auch mittels einem auf die Grundstruktur der Führungsschiene aufgebrachtem Bremsprofil hergestellt sein. Selbstverständlich kann der Bremsbereich mit einem Reibungsbeeinflussenden Mittel, beispielsweise Nanokomposite oder mit einer Oberflächenstruktur zur Erhöhung der Reibung versehen sein. Ein Vorteil dieser Ausführung ist, dass ein Reibwert möglichst hoch gewählt werden kann. wodurch sich die erforderliche Normalkraft wiederum reduziert. Dies ermöglicht die Bereitstellung einer kostengünstigen Bremseinrichtung.

In einer Vorteilhaften Ausführung ist die Trennung zwischen Führungsbereich und Bremsbereich derart ausgeführt, dass ein Übertragen von Gleitstoffen wie beispielsweise Öl oder anderen Gleitmitteln vom Führungsbereich zum Bremsbereich verhindert oder verringert wird. Eine Funktionssicherheit der Bremseinrichtung wird dadurch deutlich erhöht, da keine Reibwertvermindernden Stoffe einfach in den Bremsbereich gelangen können.

In einer alternativen Ausführung ist die Bremseinrichtung im Bereiche einer Antriebsmaschine angeordnet ist und die Bremsfläche steht in direkter Verbindung zu einer Treibscheibe oder einer Antriebswelle der Antriebsmaschine. Hierbei wird die Brems- und Haltewirkung der Bremseinrichtung über Trag- und Treibmittel zur Aufzugskabine übertragen. Eine Haltebremse beim Antrieb, kann dadurch kostengünstig bereitgestellt werden, da als Folge der Keilwirkung eine reduzierte Bremskraft möglich ist.

Weitere vorteilhafte Ausführungen sind in den abhängigen Ansprüchen beschrieben.

Im Folgenden wird die Erfindung anhand mehrerer Ausführungsbeispiele im Zusammenhang mit den Figuren näher erläutert. Es zeigen:

Fig. 1    eine schematisch Ansicht einer Aufzugsanlage
Fig. 2    eine Ansicht einer bekannten Bremseinrichtung
Fig. 3    eine schematische Ansicht einer Führungsschiene mit integrierter Bremsbahn
Fig. 4    eine schematische Ansicht einer alternativen Führungsschiene mit integrierter Bremsbahn und getrenntem Führungsbereich
Fig. 5    eine Prinzipskizze einer Keilrille

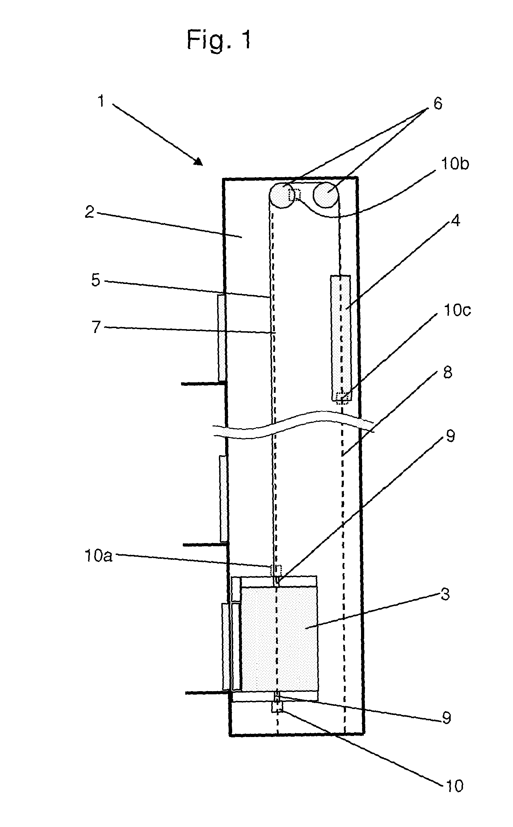

Eine mögliche Gesamtanordnung einer Aufzugsanlage ist in der Fig. 1 dargestellt. Die Aufzugsanlage 1 besteht aus einer Aufzugskabine 3), zur Aufnahme von Gütern oder Personen. Die Kabine 3 ist entlang einer Führungsbahn bzw. von Führungsschienen 7 verfahrbar angeordnet. Die Aufzugsanlage 1 ist in einem Schacht 2 eines Gebäudes eingebaut. Die Aufzugskabine 3 ist mittels Trag-und Treibmittel 5 zu einem Gegengewicht 4 verbunden. Mittels eines Antriebes 6), der im dargestellten Beispiel auf die Tragmittel 5 einwirkt, wird die Kabine 3 gegengleich zum Gegengewicht 4 bewegt. Die Führungsschienen 7 zum Führen der Kabine, sowie Führungsschienen 8 zum Führen des Gegengewichts 4 sind fest im Gebäude, bzw. im Schacht 2 angeordnet. Die Kabine 3 ist mittels Führungsschuhe oder -rollen 9 entlang der Führungsschienen 7 geführt. Die Aufzugskabine 3 ist mit Bremseinrichtungen 10 ausgerüstet, welche einerseits die Aufzugskabine 3 in einer Halteposition halten und /oder die Aufzugskabine 3 in einem Fehlerfalle abbremsen und halten kann.

Im dargestellten Beispiel sind Bremseinrichtungen 10 unterhalb der Kabine 3 angeordnet. Selbstverständlich ist auch, wie optional in Fig. 1 dargestellt, ein Anbau 10a oberhalb der Kabine 3 möglich, oder die Bremseinrichtung 10 kann je nach Anforderung beim Antrieb 6,1 0b, beim Gegengewicht 4, 10c oder bei einer Umlenkrolle angeordnet sein.

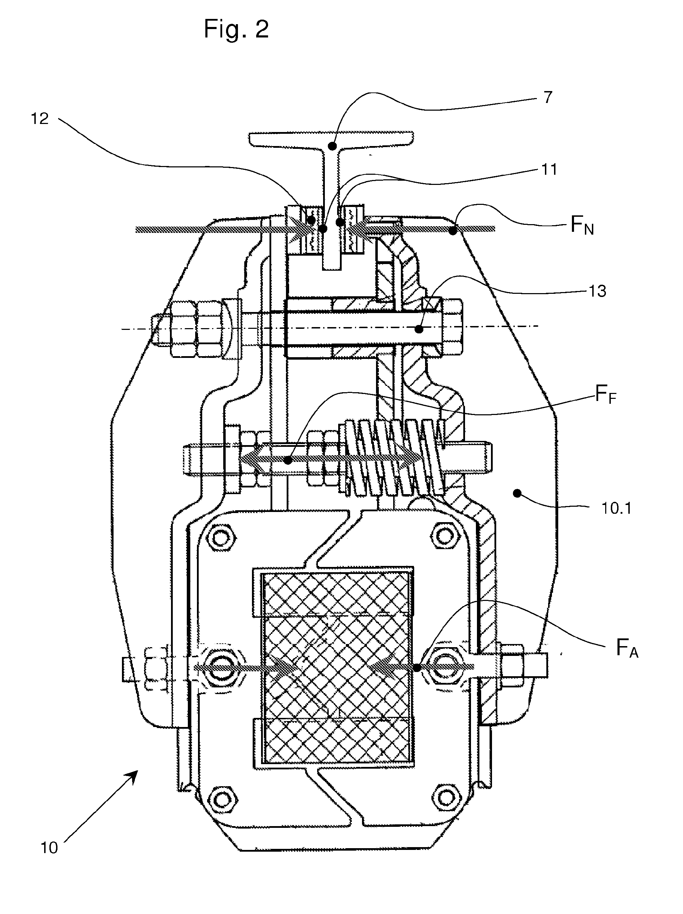

Fig. 2 zeigt ein Ausführungsbeispiel einer bekannten Bremseinrichtung 10. Die Bremseinrichtung weist zwei Bremshebel 10.1 auf, welche im Wesentlichen bei einer Achse 13 gelagert sind. An vorderen Enden der Bremshebel 10.1 sind Bremsbeläge 12 angeordnet. Die Bremshebel 10.1 werden durch eine Federkraft $F_F$ auseinander gedrückt. Bedingt durch die Lagerung der Bremshebel 10.1 bei der Achse 13 werden vordere Enden der Bremshebel 10.1 mit den Bremsbelägen 12 entsprechend den Hebelabmessungen mit einer Anpresskraft $F_N$ gegen Bremsflächen 11 der Führungsschiene 7 gepresst. Dadurch ergibt sich an der Bremsfläche 11 eine resultierende Reibkraft, bzw. Haltekraft $F_H$ oder Bremskraft $F_B$. Die resultierende Reibkraft ist dabei gleich der Anpresskraft $F_N$ multipliziert mit den Anzahl Bremsflächen (im dargestellten Beispiel zwei Bremsflächen) und einem Reibwert $\mu$. Der Reibwert $\mu$ entspricht dabei im Haltezustand einem Haftreibwert $\mu_H$ und bei einem Bremszustand einem Gleitreibwert $\mu_G$.

Die Haltekraft berechnet sich somit zu:        $F_H = F_N \times 2 \times \mu_H$        [1]

Die Bremskraft berechnet sich entsprechend zu:    $F_B = F_N \times 2 \times \mu_G$        [2]

Zum Lüften der Bremseinrichtung 10, d.h. wenn die Kabine 3 verfahren werden soll, werden die Bremshebel 10.1 mittels einer Aktuatorkraft $F_A$ an deren hinteren Enden zusammengezogen, wodurch die Bremsbeläge 12 entlastet werden und eine Brems- oder Haltekraft dadurch entfällt.

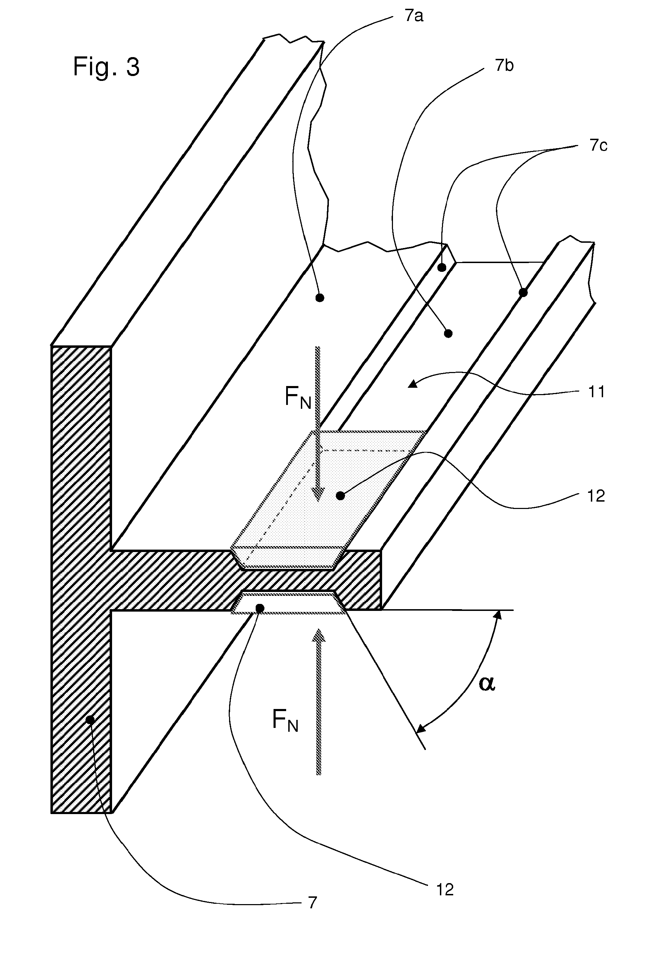

Fig. 3 zeigt eine Führungsschiene 7 wie sie zum Zusammenwirken mit einer Bremseinrichtung 10 ausgeführt ist. Die Führungsschiene ist in der Form eines T-Profils realisiert. Die Führungsschiene 7 weist einen Schienensteg 7a auf, in welchen die Bremsfläche 11 in Form einer Längs-Keilrille eingearbeitet ist. Die Längs-Keilrille ist im dargestellten Beispiel an einer Vor- und Rückseite des Steges 7a eingearbeitet. Die Längs-Keilrille weist zwei seitliche Flanken 7c auf, welche entsprechend einem Winkel $\alpha$ zur Steg-Hauptfläche 7a geneigt sind. Die seitlichen Flanken 7c sind zum Zusammenwirken mit dem Bremsbelag 12 vorgesehen, welcher die gleichermassen geneigten seitlichen Flanken, bzw. die passende Gegenform, aufweist. Die seitlichen Flanken des Bremsbelages 12 und / oder die seitlichen Flanken 7c der Längs-Keilrille sind allenfalls mit Reibwertbeeinflussenden Schichten versehen. Dies können keramische Schichten sein, es kann eine speziell aufgeraute Fläche sein oder es können Nanokomposite zur Erhöhung der Reibung aufgebracht sein. Der Bremsbelag 12 wird zum Zwecke des Bremsens, beispielsweise mit einer Bremseinrichtung wie in Fig. 2 dargestellt, mit der Anpresskraft $F_N$ in die Längs-Keilrille gedrückt. Der Keilgrund 7b weist dabei zum Bremsbelag 12 ein genügendes Spiel auf, um allfälligen Verschleiss der seitlichen Flanken aufzufangen. Die Anpresskraft wirkt dabei in senkrechter Richtung (90°) zur Stegfläche 7a.

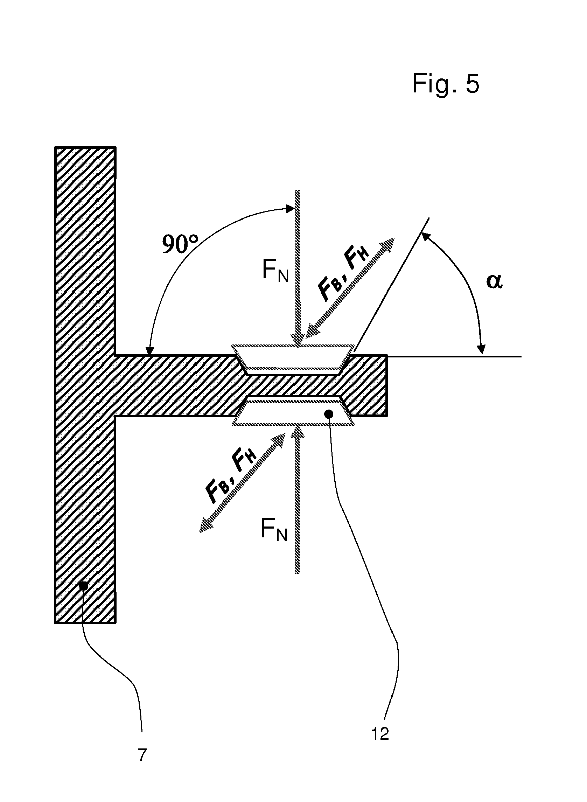

Wie in Fig. 5 schematisch dargestellt ergibt sich, unter Berücksichtigung des Keilwinkel $\alpha$ eine resultierende Bremskraft $F_B$ bzw. Haltekraft $F_H$ von:

$$\text{Haltekraft:} \qquad F_H = (1/\cos\alpha) \times F_N \times 2 \times \mu_H \qquad [1.1]$$

$$\text{Bremskraft:} \qquad F_B = (1/\cos\alpha) \times F_N \times 2 \times \mu_G \qquad [2.1]$$

Diese Halte- bzw. Bremskraft bezieht sich wiederum auf eine Bremseinrichtung 10 mit zwei Bremsflächen 11 wie in Fig. 1 prinzipiell dargestellt, wo beidseitig des Schienensteges 7a eine Bremsfläche 11 mit dem entsprechenden Bremsbelag 12 vorhanden ist. Die Wirkrichtung der Brems- bzw. Haltekraft ergibt sich hierbei aus einer Bewegungs- oder Kraftzugrichtung, welche auf die Bremseinrichtung einwirkt.

Die folgende Tabelle gibt eine Übersicht erreichbarer Bremskraftverstärkung in Abhängigkeit des gewählten Keilwinkel $\alpha$:

| Keilwinkel $\alpha$ | resultierende Bremskraftverstärkung |
|---|---|
| 30° | + 15% |
| 45° | +41% |
| 60° | + 100% |
| 75° | + 285% |

Bei Verwendung eines Keilwinkel $\alpha$ von 30° resultiert somit eine Bremskraftverstärkung von etwa 15%, bzw. ein Verstärkungsfaktor von 1,15. Unter Abwägung der resultierenden Bremskraftverstärkung und der damit zunehmenden Beanspruchung der Bremsbeläge 12 ergibt sich ein vorgeschlagener optimaler Keilwinkel $\alpha$ im Bereich von 30° bis 60°. Zum Erreichen einer gewünschten Haltekraft kann nun auch eine entsprechend reduzierter Anpresskraft $F_N$ gewählt werden, was weiter die Verwendung einer Bremseinrichtung 10 mit geringen Aktuatorkräften ermöglicht. Eine derartige Längs-Keilrille hat weiter den Vorteil, dass der Bremsbelag 12 seitlich geführt ist. Ein Entgleisen des Bremsbelages 12 ist dadurch verhindert. Selbstverständlich ist es vorstellbar eine Längskeilrille primär zum Zwecke der seitlichen Führung vorzusehen. Hierbei könnten andersartig geformte Längsrillen, wie Beispielsweise eine gewölbte Rille oder es könnten auch flache Keilwinkel in einem Winkelbereich unter 30° verwendet werden. Auch diese Rillen bewirken entsprechend den obigen Ausführungen nach wie vor eine Verstärkung der resultierenden Bremskraft.

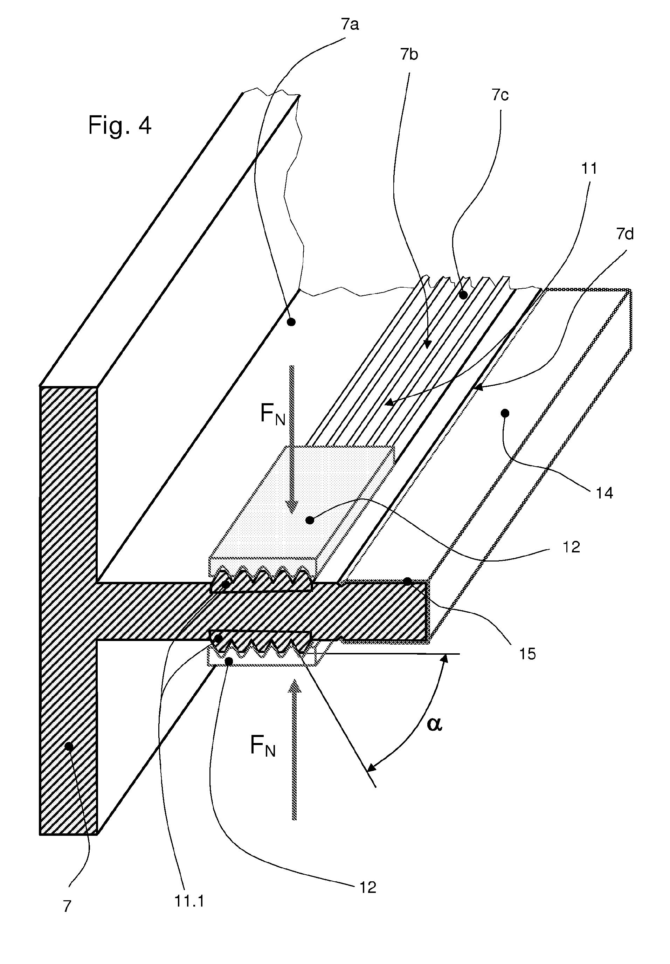

Fig. 4 zeigt eine weitere Führungsschiene 7 wie sie zum Zusammenwirken mit einer Bremseinrichtung 10 ausgeführt sein kann. Auch diese Führungsschiene ist in der Form eines T-Profils realisiert. Die Führungsschiene 7 weist einen Schienensteg 7a auf, in welchen die Bremsfläche 11 in Form von mehreren parallel verlaufenden Längs-Keilrillen eingearbeitet sind. Eine derartige Schiene kann beispielsweise leicht durch einen Ziehprozess hergestellt werden oder die Längskeilrillen können wie in der Fig. 4 beispielhaft dargestellt in einen Grundträger 11.1 eingearbeitet sein, welcher als gesamtes in den Schienensteg 7a eingefügt wird.

Auch in diesem Beispiel sind die Keilflanken 7c entsprechend einem Keilwinkel $\alpha$ angeordnet und ein Bremsbelag 12 wirkt mit diesen Keilrillen zusammen. Die Berechnung der Halt- bzw. Bremskräfte erfolgt wie in Formeln [1.1, 2.1 dargestellt und die resultierende Bremskraftverstärkung ergibt sich wie in der zu Fig. 5 erläuterten Tabelle. Diese Mehrfach-Rillenform hat den Vorteil, dass sich die Flankenfläche gegenüber dem vorgängigen Beispiel deutlich erhöht, und dass dadurch ein Verschleiss reduziert wird.

Die in diesem Beispiel dargestellte Führungsschiene 7 verfügt über getrennte Bremsbereiche, bzw. Bremsflächen 11 und Führungsbereiche 14. Der Bremsbereich 11 dient wie bereits erläutert zum Halten oder Bremsen der Kabine, der Führungsbereich 14 dient dem Führen der Kabine 3 mittels Führungsschuhen oder -Rollen 9 (Fig. 1). Im Beispiel gemäss Fig. 4 ist der Bremsbereich 11 mittels einer Rille 7d vom Führungsbereich getrennt. Dies ermöglicht, dass beispielsweise ein Ölfilm, welcher auf der Führungsfläche 14 zur Verringerung des Führungswiderstandes aufgebracht ist, an einem Hineinfliessen in den Bremsbereich 11 gehindert wird. Im Weiteren kann der Führungsbereich 14 mit anderem Gleitwiderstand, oder Geräuschvermindernden Massnahmen versehen sein. So kann eine spezielle Gleitfolie oder Gleitbelag 15, beispielsweise aus einem Teflonbeschichtetem Kunststoffprofil, aufgebracht sein oder die Oberfläche des Führungsbereichs 14 kann, beispielsweise, mit Nanokompositen zur Verringerung von Reibung, behandelt sein.

Die Anhand der Fig. 3 und 4 aufgezeigten Lösungen sind kombinierbar. Die Keilrillen können selbstverständlich vorstehend oder vertieft angeordnet werden oder der Steg 7a kann an einer beliebig geformten Führungsschiene angeordnet werden. Auch die aufgezeigten Lösungen zur Trennung von Führungsbereich und Bremsbereich sind beliebig anwendbar.

Die aufgezeigten Lösungen sind natürlich auch an einer Gegengewichtsführungsschiene oder an einer Bremsscheibe des Antriebs umsetzbar und die Produktionsmethoden der Längs-Keilrillen werden vom Steg-Hersteller ausgewählt.

**Patentansprüche**

1. Aufzugsanlage mit einer Aufzugskabine (3) und einer Bremseinrichtung (10) zum Bremsen und Halten der Aufzugskabine (3), die Bremseinrichtung (10) beinhaltet einen Bremsbelag (12), welcher zum Zwecke des Bremsens und Haltens mit einer Bremsfläche (11) zusammenwirkt,
**dadurch gekennzeichnet, dass** die Bremsfläche (11) mindestens eine in Bremsrichtung ausgerichtete Längs-Keilrille oder Keilerhebung aufweist, auf welche der Bremsbelag (12) bedarfsweise einwirkt.

2. Aufzugsanlage nach Anspruch 1,
**dadurch gekennzeichnet, dass** der Bremsbelag (12) einer zur Längs-Keilrille oder Keilerhebung der Bremsfläche (11) passende Gegenform aufweist.

3. Aufzugsanlage nach Anspruch 1 oder 2,
**dadurch gekennzeichnet, dass** die Bremseinrichtung (10) im Bereiche der Aufzugskabine (3) angeordnet ist, und die Bremsfläche (11) in eine Führungsschiene (7) integriert ist, welche Führungsschiene (7) die Aufzugskabine (3) führt.

4. Aufzugsanlage nach Anspruch 3,
**dadurch gekennzeichnet, dass** die Führungsschiene (7) einen Führungsbereich (14) zur Interaktion mit dem Führungsmittel und einen Bremsbereich als Bremsfläche (11) zur Interaktion mit der Bremseinrichtung (10) aufweist, wobei der Führungsbereich (14) und Bremsbereich unterschiedliche Oberflächen aufweisen und der Führungsbereich (14) geometrisch vom Bremsbereich getrennt ist

5. Aufzugsanlage nach einem der Ansprüche 3 oder 4,
**dadurch gekennzeichnet, dass** die Führungsschiene (7), vorzugsweise eine T-förmige Führungsschiene (7), einen Schienensteg aufweist und dieser Schienensteg sowohl den Führungsbereich (14) zur Interaktion mit dem Führungsmittel und den Bremsbereich (11) zur Interaktion mit der Bremseinrichtung (10) aufweist.

6. Aufzugsanlage nach einem der Ansprüche 3 bis 5,
**dadurch gekennzeichnet, dass** der Führungsbereich (14) mit einem Gleitmittel, beispielsweise Nanokomposite zur Verringerung der Reibung, oder mit einer Gleitbeschichtung (15) versehen ist, wobei die Gleitbeschichtung (15) ein Profil, vorzugsweise ein Teflon enthaltendes Kunststoffprofil ist.

7. Aufzugsanlage nach einem der vorgängigen Ansprüche,
**dadurch gekennzeichnet, dass** der Bremsbereich (11) in die Grundstruktur der Führungsschiene (7) eingearbeitet, alternativ gezogen, gewalzt oder mechanisch bearbeitet, ist und / oder dass der Bremsbereich (11) mittels einem auf die Grundstruktur der Führungsschiene (7) aufgebrachten Bremsprofil hergestellt ist und / oder dass der Bremsbereich (11) mit einem Reibungsbeeinflussenden Mittel, beispielsweise Nanokomposite zur Erhöhung der Reibung versehen ist.

8. Aufzugsanlage nach einem der vorgängigen Ansprüche,
**dadurch gekennzeichnet, dass** die Trennung zwischen Führungsbereich (14) und Bremsbereich (11) ein Übertragen von Gleitmittel im Besonderen vom Führungsbereich (14) zum Bremsbereich (11) verhindert.

9. Aufzugsanlage nach Anspruch 1 oder 2,
**dadurch gekennzeichnet, dass** die Bremseinrichtung (10) im Bereiche einer Antriebsmaschine (6) angeordnet ist und die Bremsfläche (11) in direkter Verbindung zu einer Treibscheibe oder einer Antriebswelle der Antriebsmaschine (6) steht, wobei die Brems- und Haltewirkung der Bremseinrichtung (10) über Trag-und Treibmittel (5) zur Aufzugskabine (3) übertragen ist.

10. Führungsschiene einer Aufzugsanlage, die Führungsschiene (7) weist eine Bremsfläche (11) zur Interaktion mit einer Bremseinrichtung (10) auf,
**dadurch gekennzeichnet, dass** die Bremsfläche (11) mindestens eine in Bremsrichtung ausgerichtete Längs-Keilrille oder Keilerhebung aufweist, auf welche die Bremseinrichtung (12) bedarfsweise einwirkt.

11. Bremseinrichtung einer Aufzugsanlage zum Bremsen und Halten einer Aufzugskabine (3), die Bremseinrichtung (10) beinhaltet einen Bremsbelag (12), welcher zum Zwecke des Bremsens und Haltens mit einer Bremsfläche (11) zusammenwirkt,
**dadurch gekennzeichnet, dass** der Bremsbelag (12) mindestens eine in Bremsrichtung ausgerichtete Längs-Keilrille oder Keilerhebung aufweist, welche bedarfsweise auf die Bremsfläche (11) einwirkt.

12. Verfahren zum Führen, Halten und Bremsen einer Aufzugsanlage (3) mit einer Aufzugskabine, wobei die Aufzugskabine (3) mittels Führungsmittel (9) entlang von Führungsschienen (7) geführt wird, die Aufzugskabine (3) mittels Bremseinrichtung (10) gebremst und gehalten wird, wobei die Bremseinrichtung (10) zum Zwecke des Bremsens und Haltens auf die Führungsschiene (7) einwirkt, wobei die Führungsschiene (7) mit einem Führungsbereich (14) zur Interaktion mit dem Führungsmittel und mit einer Bremsfläche (11) zur Interaktion mit der Bremseinrichtung (10) versehen wird.
**dadurch gekennzeichnet, dass** die Bremsfläche (11) mit mindestens einer in Bremsrichtung ausgerichteten Längs-Keilrille oder Keilerhebung ausgeführt wird, auf welche der Bremsbelag (12) bedarfsweise einwirken kann.

# Fig. 1

Fig. 2

Fig. 3

Fig. 4

Fig. 5

**Europäisches Patentamt**

# EUROPÄISCHER RECHERCHENBERICHT

Nummer der Anmeldung

EP 06 12 5624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 856 485 A1 (KONE OY [FI] KONE CORP [FI]) 5. August 1998 (1998-08-05) * Spalte 4, Zeile 21 - Zeile 47 * * Abbildung 2 * ----- | 1-12 | INV. B66B5/16 B66B7/02 |
| A | JP 06 199483 A (MITSUBISHI ELECTRIC CORP) 19. Juli 1994 (1994-07-19) * Zusammenfassung; Abbildungen 1,2 * ----- | 1,2, 10-12 | |
| D,A | EP 1 213 249 A (INVENTIO AG [CH]) 12. Juni 2002 (2002-06-12) * Zusammenfassung; Abbildung 2 * ----- | 1 | |
| A | EP 0 774 439 A (INVENTIO AG [CH]) 21. Mai 1997 (1997-05-21) * Spalte 2, Zeile 55 - Spalte 3, Zeile 31 * * Abbildung 2 * ----- | 1,4, 10-12 | |

RECHERCHIERTE SACHGEBIETE (IPC)

B66B

Der vorliegende Recherchenbericht wurde für alle Patentansprüche erstellt

| Recherchenort | Abschlußdatum der Recherche | Prüfer |
|---|---|---|
| Den Haag | 3. Mai 2007 | Guisan, Thierry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 12 5624

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 0856485 | A1 | 05-08-1998 | AU | 738706 B2 | 27-09-2001 |
| | | | AU | 5283098 A | 06-08-1998 |
| | | | BR | 9800502 A | 08-06-1999 |
| | | | CA | 2225288 A1 | 30-07-1998 |
| | | | CN | 1189442 A | 05-08-1998 |
| | | | DE | 69813332 D1 | 22-05-2003 |
| | | | DE | 69813332 T2 | 23-10-2003 |
| | | | ES | 2194240 T3 | 16-11-2003 |
| | | | FI | 970390 A | 31-07-1998 |
| | | | JP | 3532754 B2 | 31-05-2004 |
| | | | JP | 10218524 A | 18-08-1998 |
| | | | US | 6131704 A | 17-10-2000 |
| JP 6199483 | A | 19-07-1994 | JP | 2763244 B2 | 11-06-1998 |
| EP 1213249 | A | 12-06-2002 | KEINE | | |
| EP 0774439 | A | 21-05-1997 | AU | 713353 B2 | 02-12-1999 |
| | | | AU | 7192396 A | 29-05-1997 |
| | | | CA | 2190800 A1 | 23-05-1997 |
| | | | CN | 1158819 A | 10-09-1997 |
| | | | JP | 9165162 A | 24-06-1997 |
| | | | NO | 964946 A | 23-05-1997 |
| | | | US | 6006867 A | 28-12-1999 |
| | | | ZA | 9609764 A | 17-06-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1213249 A